# EUROPÄISCHE PATENTSCHRIFT

(11) **EP 1 110 070 B1**
(45) Veröffentlichungstag und Bekanntmachung des Hinweises auf die Patenterteilung: **03.11.2004**
(21) Anmeldenummer: 99941629.0
(22) Anmeldetag: 16.08.1999
(51) Int. Cl.: G01M 3/04

(54) **LICHTWELLENLEITER-WASSERSENSOR**
OPTICAL FIBER WATER SENSOR
DETECTEUR D'EAU A FIBRES OPTIQUES

(30) Priorität: 29.08.1998 DE 19839426
(43) Veröffentlichungstag der Anmeldung: 27.06.2001
(73) Patentinhaber: Wolf Kabeltechnik GmbH, 70437 Stuutgart (DE)
(72) Erfinder: WOLF, Roland, D-70439 Stuttgart (DE)
(74) Vertreter: Jeck, Anton, Dipl.-Ing.
(86) Internationale Anmeldenummer: PCT/EP1999/005998
(87) Internationale Veröffentlichungsnummer: WO 2000/012990

(56) Entgegenhaltungen:
- WO-A-94/18537
- US-A- 5 757 988
- TAKASHIMA S ET AL: "WATER SENSING METHOD WITH OTDR AND OPTICAL SENSOR FOR NON-PRESSURIZED OPTICAL FIBER CABLE SYSTEM" IEICE TRANSACTIONS ON COMMUNICATIONS,JP,INSTITUTE OF ELECTRONICS INFORMATION AND COMM. ENG. TOKYO, Bd. E77-B, Nr. 6, Seite 794-798 XP000466581 ISSN: 0916-8516

## Beschreibung

Die Erfindung betrifft eine Meßvorrichtung gemäß dem Oberbegriff des Anspruchs 1.

Eine derartige Messvorrichtung ist durch die US-A-5 757 988 bekannt. Der dort offenbarte Wassersensor hat ein rahmenförmiges Gehäuseteil mit einer Kammer für die Aufnahme der Schwammplatte, die auf einen abgefederten Balken wirkt. Der Balken wirkt über eine Zugstange auf eine Optofaser ein, die in zwei Spalten zwischen einem Gehäuseteil und einer mit diesem verbindbaren Leiste geführt ist. Das genannte Gehäuseteil ist mit einer Lochplatte abdeckbar. Der Wassersensor kann in Spleißgehäusen für Optofasern angeordnet und kassettenartig ausgebildet sein. Die Dämpfungsmessung erfolgt mit einem OTDR-Messgerät.

Weitere ähnliche Messvorichtungen sind durch die WO94/18537 und durch die Literaturstelle "Water Sensing Method..." in IEICE Transactions on Communications, Bd. E77-B, Nr. 6, S. 794-798, bekannt.

Die Aufgabe der Erfindung besteht darin, eine Meßvorrichtung der im Oberbegriff des Anspruchs 1 genannten Art zu schaffen, bei der die Stärke der Biegung des Lichtwellenleiterabschnitts und demnach der Dämfpungsanstieg für das Meßgerät besser definiert werden kann.

Diese Aufgabe wird mit den Merkmalen des Anspruchs 1 gelöst.

Gemäß einer einfachen, weiteren Ausbildung ist das Gehäuse mit mindestens einer Öse zum Anclipsen an die Kassette der Verbindungsstelte versehen. Aufclipsdorne sind in den bekannten Kassetten oder Spleißkassetten der Verbindungsstelle bereits vorgesehen.

Gemäß einer vorteilhaften, weiteren Ausbildung der Erfindung ist der Lichtwellenleiterabschnitt eine mit einer Sekundärbeschichtung versehene Glasfaser, deren Sekundärbeschichtung im Innern des Gehäuses entfernt ist und die mit ihren Enden an einem zu überwachenden Lichtwellenleiter des Lichtwellenleiterkabels angespleist ist. Der Lichtwellenleiterabschnitt kann damit in einer Spleißkassette, in der die Lichtwellenleiter des Lichtwellenleiterkabels gespleist werden, mitgespfeist werden.

Gemäß einer weiteren Ausbildung der Erfindung ist die Glasfaser in der Kassette der Verbindungsstelle in Form von mindestens einer Schleife verlegt. Die Rückbiegung des bei Wassereintritt gebogenen Lichtwellenleiterteils des Lichtwellenleiterabschnitts wird dadurch unterstützt.

Eine weitere vorteilhafte Ausbildung bezieht sich auf eine Messvorrichtung, bei der das Gehäuse als Kassette ausgebildet ist. Gemäß dieser Ausbildung weist die Kassette eine Spannvorrichtung mit einem auf die Schwammplatte abstützbaren. Spannband zur Einstellung der Quellhöhe und zum Zusammendrücken der Schwammplatte nach Beseitigung des eingetretenen Wassers auf. Die Spannvorrichtung ist von der Außenseite der Kassette einfach einstellbar.

Die Erfindung wird nun anhand von Ausführungsbeispielen näher erläutert. Es zeigen:
- Fig. 1: eine Draufsicht auf eine geschlossene, einen Wassersensor beinhaltende Kassette einer Lichtwellenleiter-Verbindungsstelle,
- Fig. 2: eine Draufsicht auf die geöffnete Kassette der Fig. 1 und auf den Wassersensor in Form einer in dieser Kassette befestigten, geschlossenen Wassersensorkassette,
- Fig. 3: eine Draufsicht auf eine geöffnete Spleißkassette einer Lichtwellenleiter-Verbindungsstelle und auf die in dieser Spleißkassette befestigte, geschlossene Wassersensorkassette der Fig. 2,
- Fig. 4: eine Draufsicht der Wassersensorkassette der Fig. 3 im geöffneten und aktivierten Zustand mit mindestens einer verstellbaren Spannbandhalterung,
- Fig. 5: eine Draufsicht auf die in Fig. 4 dargestellte Wassersensorkassette, die sich im nicht aktivierten Zustand befindet,
- Fig. 6: eine Draufsicht auf einen nicht aktivierten Wassersensor, dessen Gehäuse die Form eines offenen Halters hat,
- Fig. 7: eine Draufsicht auf einen aktivierten Wassersensor, dessen Gehäuse die Form eines offenen Halters hat,
- Fig. 8: eine Draufsicht auf einen aktivierten Wassersensor der Fig. 4 mit einem kreisförmig geschlossenen Spannband,
- Fig. 9: eine schematische Darstellung einer gesamten Messvorrichtung.

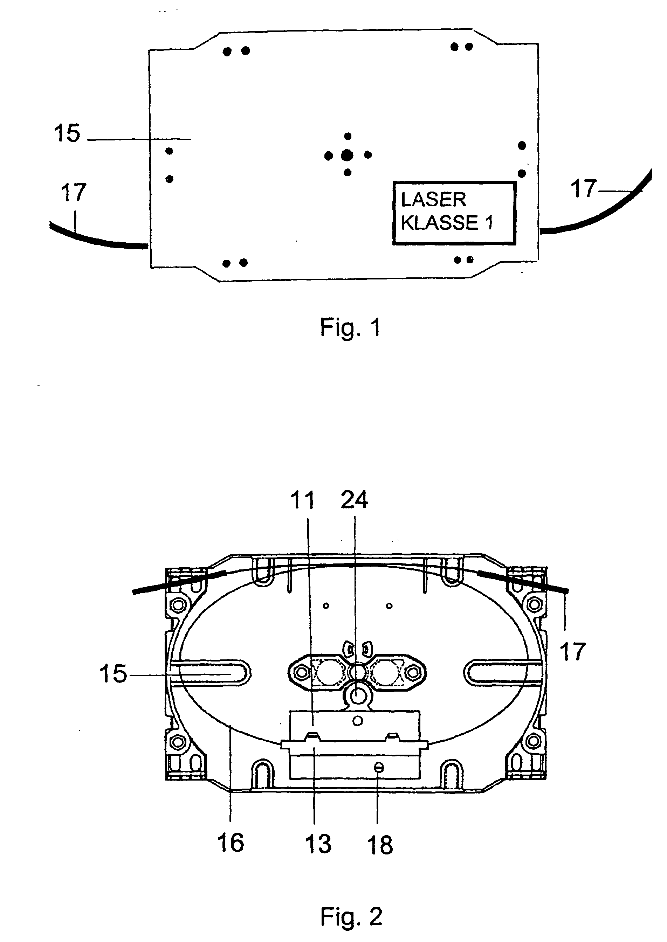

In den Figuren 1 und 2 ist eine Kassette 15 an einer Lichtwellenleiter-Verbindungsstelle im geschlossenen bzw. geöffneten Zustand dargestellt. Diese Kassette besteht aus einem Kunststoff-Unterteil und einem Kunststoffdeckel, der mittels Schrauben oder Clips auf dem Unterteil befestigt ist. Fig. 2 stellt diese Kassette geöffnet dar, die den Wassersensor 11 in Form einer Kassette enthält. Die Wassersensorkassette 11 ist mit einer Befestigungsöse 24 versehen und mit dieser Öse auf einem Aufclipsdorn der Kassette 15 aufgeclipst. In die Kassette 15 ist ein Lichtwellenleiter 17 eingelegt, der in bekannter Weise eine Primärbeschichtung und eine Sekundärbeschichtung aufweist. Die Sekundärbeschichtung ist innerhalb der Kassette 15 entfernt. Aus dem sekundärbeschichtungslosen, spleißfreien Licht-wellenleiterabschnitt 16 ist eine Schleife gebildet, von der ein Teil in die Wassersensorkassette 11 eingelegt ist. Die beiden Enden des Lichtwellenleiters 17 sind in nicht dargestellter Weise ebenfalls von der Sekundärbeschichtung befreit, um sie mit dem zu überwachenden Lichtwellenleiter des Lichtwellenleiterkabels verbinden zu können.

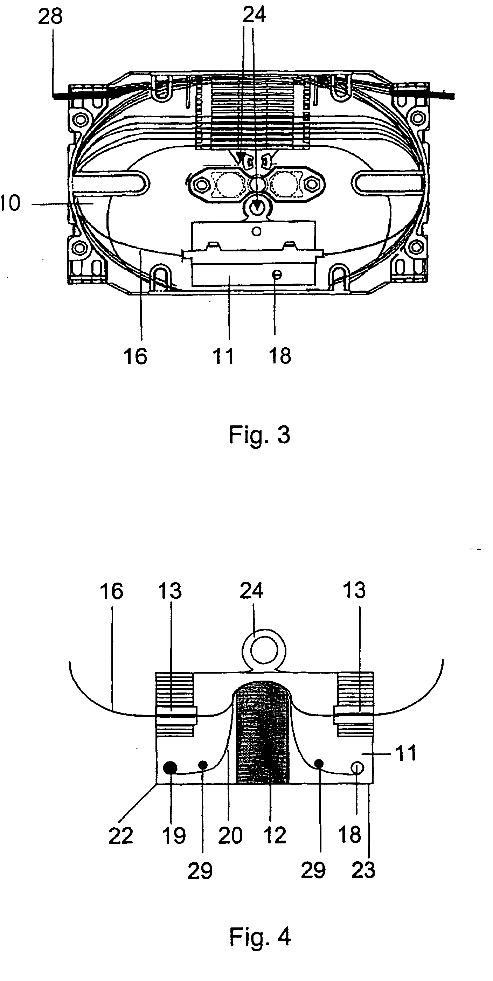

In Fig. 3 ist eine Spleißkassette 10 der Lichtwellenleiter-Verbindungsstelle mit der Wassersensorkassette 11 dargestellt. Lichtwellenleiter einer in die Spleißkassette 10 eingeführten Lichtwellenleiter-Bündelader 28 sind auf einem Spleißkamm zusammengespleißt. Der zu überwachende Lichtwellenleiter 16 ist ebenfalls auf diesem Spleißkamm abgelegt. Ein Abschnitt dieses Lichtwellenleiters 16 ist zur Überwachung in die Wassersonsorkassette 11 eingelegt. Die Kassette 11 ist hier wieder mit einer Öse 24 versehen, die auf einem Aufclipsdorn der Spleißkassette 10 aufgeclipst ist. Die Kassette 11 weist mindestens eine einstellbare Spannvorrichtung 18 auf, deren Zweck aus Fig. 4 hervorgeht.

Fig. 4 stellt die Wassersensorkassette 11 im geöffneten und aktivierten Zustand dar. Auf einer rechteckförmigen Bodenplatte 22 sind an den Schmalseiten zwei Führungselemente 13 angeordnet, in die der Lichtwellenleiterabschnitt 16 eingelegt wird. Diese Führungselemente sind aufeinander ausgerichtet, in verschiedener Höhe der Grundplattenschmalseiten an der Bodenplatte 22 befestigbar und auch bei geschlossener Kassette 11 zugänglich. Die Befestigung der Führungselemente 13 an der Bodenplatte 22 ist vorzugsweise eine Clipsverbindung. In der Mitte einer mit der Bodenplatte 22 verbundenen Längsseitenwand 23 stützt sich ein Quellkörper in Form einer Viskosepressschwammplatte 12 ab. Zwischen der Spannvorrichtung 18 und dem Spannband-Haltepunkt 19 ist ein Spannband 20 gespannt, das, um in der Nähe der Spannvorrichtung 18 und dem Haltepunkt 19 auf der Bodenplatte 22 stehenden Umlenkstifte 29 lenkbar ist und das sich um die, aufgrund der durch Wassereintritt ausgedehnten Platte 12 legt. Durch das Spannband 19 wird der Lichtwellenleiterabschnitt 16 mitgeführt, der damit innerhalb der Kassette 11 eine erhebliche Biegung erfährt. Durch Drehen an der Spannvorrichtung 18 (auch bei geschlossener Kassette 11) kann das Spannband 20 auf eine gewünschte Quellhöhe eingestellt werden. Das Spannband 20 dient auch nach Beseitigung des Wassereintritts zum Zusammendrücken der Platte 12 und zur Entlastung und Geradeausrichtung des Lichtwellenleiterabschnitts 16 in der Kassette 11.

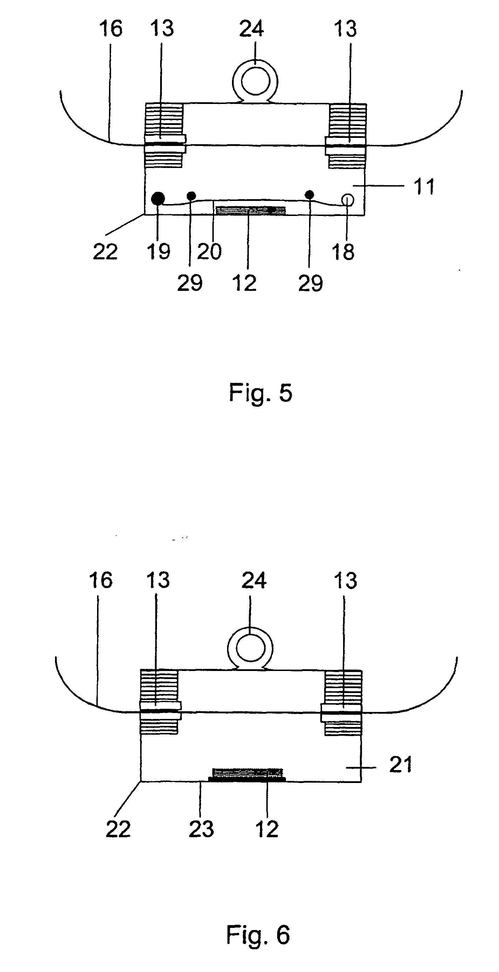

Fig. 5 zeigt die Kassette 11 im nicht aktivierten Zustand. Die trockene Platte 12 nimmt unterhalb des Spannbands 20 einen sehr geringen Raum ein. Der Lichtwellenleiterabschnitt 16 ist innerhalb der Kassette 11 gerade ausgerichtet.

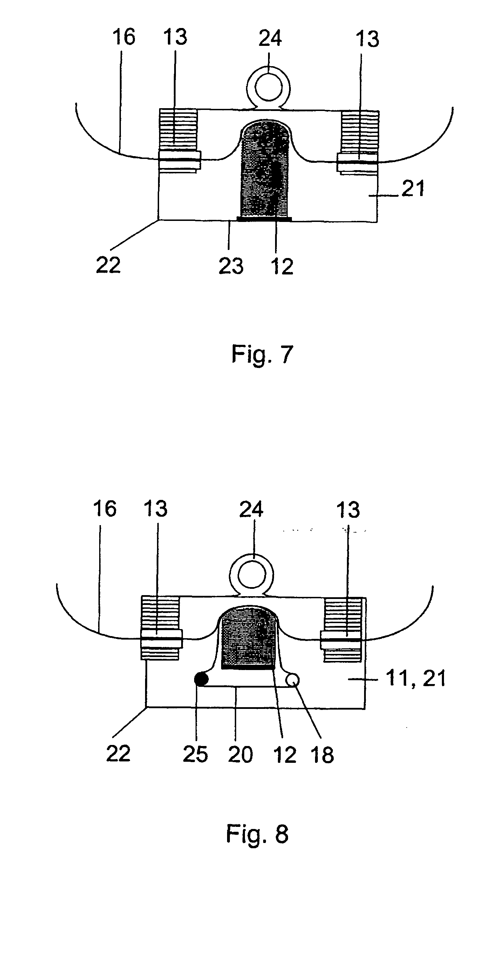

In den Figuren 6, und 7 ist ein Wassersensor in Form eines offenen Halters 21 dargestellt, der ähnlich wie die Kassette 11 aufgebaut ist, abweichend davon jedoch keinen Deckel, keine Spannvorrichtungen und kein Spannband enthält und gegebenenfalls auch keine Längsseitenwand 23 aufweist. Die Biegung des Lichtwellenleiterabschnitts 16 im Halter 21 kann lediglich mit den verstellbaren Führungselementen 13 eingestellt werden. Die Viskosepressschwammplatte 12 ist an der Längsseitenwand 23 oder auf der Bodenplatte 22 vorzugsweise angeklebt. Fig. 6 zeigt die trockene Platte 12 und den geradegerichteten Lichtwellenleiterabschnitt 16 innerhalb des Halters 21, während Fig. 7 die ausgedehnte Platte 12 und den gebogenen Lichtwellenleiterabschnitt 16 im Halter 20 darstellt.

Fig. 8 ist ein Wassersensor in Form einer Kassette 11 oder eines Halters 21 dargestellt, der ähnlich wie Fig. 4 bzw. Fig. 7 aufgebaut ist, abweichend davon jedoch ein kreisförmig geschlossenes Spannband 20 besitzt, das um eine feststehende Umlenkung 25 und eine Spannvorrichtung 18 gespannt ist.

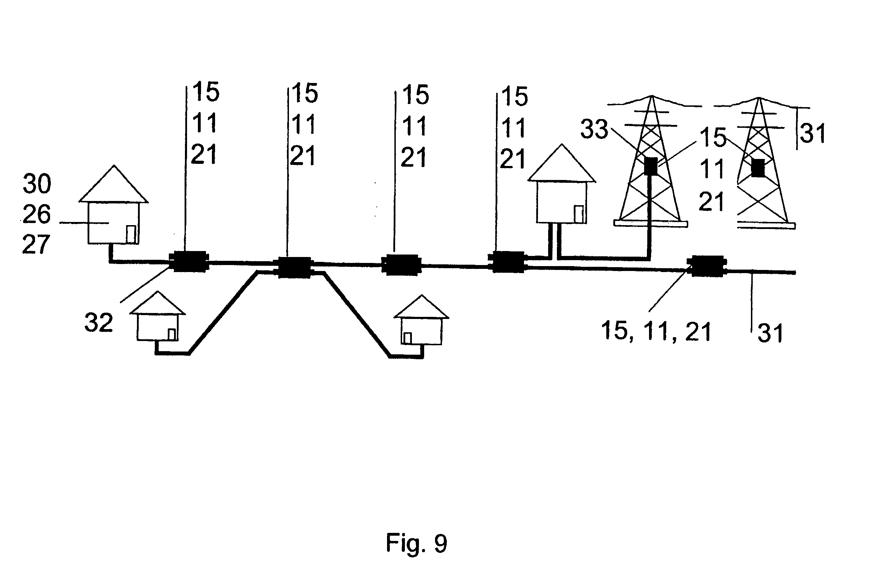

In Fig. 9 ist eine gesamte Messvorrichtung gezeigt. Die einzelnen, nicht dargestellten Dämpfungsmessgeräte für Lichtwellenleiter sind in Messstellen, wie der Messstelle 30, angeordnet. Diese Messstellen sind am Lichtwellenleiter-Zugangsund Verteilnetz 31 angeordnet, das Erdverbindungsmuffen, wie der Muffe 32, und Mastverbindungsmuffen, wie der Muffe 33, enthält. In diesen Muffen 32, 33 sind die Kassetten 15 der Verbindungsstelle, die Wassersensor-kassette 11 oder der Wassersensorhalter 21 angeordnet.

Das Messgerät ist vorzugsweise ein optisches Rückstreumessgerät (OTDR), das die Dämpfungsmessung mit einer Wellenlänge von 1550nm oder 1625nm vornimmt (27). Das Lichtwellenleiterkabel kann auch mittels eines automatischen Überwachungssystems (RFTS; 26) überwacht werden.

## Patentansprüche

1. Meßvorrichtung mit mindestens einem Wassersensor für ein Lichtwellenleiterkabel zur Erkennung des Wassereintritts, wobei
- der Wassersensor ein eigenes Gehäuse (11, 20) aufweist, das in einer Kassette (15) einer Lichtwellenleiter-Verbindungsstelle befestigbar ist,
- das Gehäuse (11, 20) zwei voneinander im Abstand angeordnete und aufeinander ausgerichtete Führungen (13) aufweist, in die ein Lichtweltenleiterabschnitt (17) einlegbar ist,
- im Gehäuse (11, 21) eine auf Wasser reagierende Schwammplatte (12) abgestützt und derart angeordnet ist, daß sie den zwischen den Führungen (13) einlegbaren Lichtwellenleiterteil des Lichtweltenleiterabschnitts (16) bei Wassereintritt verbiegt, und
- die bei Verbiegung dieses Abschnitts auftretende Dämpfungserhöhung mittels eines am Kabelanfang oder-ende angeordneten OTDR-Meßgeräts meßbar ist,
**dadurch gekennzeichnet,**
**dass** als Führungen besondere Führungselemente (13) vorgesehen sind und diese Führungselemente in Ausdehnungsrichtung der Schwammplatte (12) versetzbar angeordnet sind.

2. Meßvorrichtung nach Anspruch 1,
**dadurch gekennzeichnet,**
**daß** das Gehäuse (11, 20) mit mindestens einer Öse (23) zum Anclipsen an die Kassette (15) der Verbindungsstelle versehen ist.

3. Meßvorrichtung nach Anspruch 1 oder 2,
**dadurch gekennzeichnet,**
**daß** der Lichtwellenleiterabschnitt (17) eine mit einer Sekundärbeschichtung (16) versehene Glasfaser ist, deren Sekundärbeschichtung im Innern des Gehäuses (11, 20) entfernt ist und die mit ihren Enden (14) an einem zu überwachenden Lichtwellenleiter des Lichtwellenleiterkabels angespleist ist.

4. Meßvorrichtung nach Anspruch 3,
**dadurch gekennzeichnet,**
**daß** die Glasfaser (17) in der Kassette (15) der Verbindungsstelle in Form von mindestens einer Schleife verlegt ist.

5. Meßvorrichtung nach einem der Ansprüche 1 bis 4, bei der das Gehäuse als Kassette (11) ausgebildet ist,
**dadurch gekennzeichnet,**
**dass** die Kassette (11) eine Spannvorrichtung (18) mit einem auf die Schwammplatte (12) abstützbaren Spannband (19) zur Einstellung der Quellhöhe und zum Zusammendrücken der Schwammplatte (12) nach Beseitigung des eingetretenen Wassers aufweist.

## Claims

1. Measuring apparatus having at least one water sensor for an optical fibre cable for detecting the inlet of water, wherein
- the water sensor includes its own housing (11, 20), which is securable in a cartridge (15) of an optical fibre connecting point,
- the housing (11, 20) includes two guiding means (13), which are disposed at a spacing from one another and are aligned one relative to the other, into which guiding means (13) an optical fibre portion (17) is insertable,
- a sponge plate (12), which reacts to water, is supported in the housing (11,21) and is disposed in such a manner that, in the event of water inlet, it bends the optical fibre part of the optical fibre portion (16) that is insertable between the guiding means (13), and
- the increase in damping, which occurs when this portion is bent, is measurable by means of an OTDR measuring device, which is disposed at the beginning or the end of the cable,
**characterised in that** particular guiding elements (13) are provided as guiding means and these guiding elements are disposed so as to be displaceable in the direction of expansion of the sponge plate (12).

2. Measuring apparatus according to claim 1, **characterised in that** the housing (11, 12) is provided with at least one lug (23) for clipping to the cartridge (15) of the connecting point.

3. Measuring apparatus according to claim 1 or 2 **characterised in that** the optical fibre portion (17) is a glass fibre provided with a secondary coating, the secondary coating of said glass fibre being removed in the interior of the housing (11, 20) and the glass fibre being spliced with its ends (14) to an optical fibre, which is to be monitored, of the optical fibre cable.

4. Measuring apparatus according to claim 3, **characterised in that** the glass fibre (17) in the cartridge (15) of the connecting point is laid in the form of at least one loop.

5. Measuring apparatus according to one of claims 1 to 4, where the housing is in the form of a cartridge, **characterised in that** the cartridge (11) includes a clamping apparatus (18) with a clamp band (19), which is supportable on the sponge plate (12), for adjusting the source height and for compressing the sponge plate (12) once the water that had entered has been removed.

## Revendications

1. Dispositif de mesure avec au moins un capteur de détection d'eau pour câble à fibres optiques pour détecter l'entrée d'eau, sachant que
- le capteur de détection d'eau présente un boîtier (11, 20) propre pouvant être fixé dans une cassette (15) de point de jonction des fibres optiques ;
- le boîtier (11, 20) présente deux guides (13) alignés l'un par rapport à l'autre et agencés à une certaine distance l'un de l'autre dans lesquels est disposé un segment de fibres optiques (17) ;
- une plaque spongieuse (12) réagissant à l'eau est appuyée dans le boîtier (11, 21) et agencée de manière à déformer une partie de fibre optique du segment de fibres optiques (16) disposée entre les guides (13) ; et
- l'augmentation d'humidité surgissant lors de la déformation de ce segment est mesurable au moyen d'un appareil de mesure OTDR (réflectomètre optique dans le domaine temporel) agencé au début ou à la fin du câble ;
**caractérisé en ce que** des éléments de guidage (13) particuliers sont prévus pour servir de guides et que ces éléments de guidage sont agencés de manière à être mobiles dans le sens de dilatation de la plaque spongieuse (12).

2. Dispositif de mesure selon la revendication 1,
**caractérisé en ce que** le boîtier (11, 20) est pourvu d'au moins un anneau (23) pour clipsage à la cassette (15) du point de jonction.

3. Dispositif de mesure selon l'une quelconque des revendications 1 ou 2, **caractérisé en ce que** le segment de fibres optiques (17) est une fibre de verre pourvue d'un revêtement secondaire (16), ledit revêtement secondaire étant distant à l'intérieur du boîtier (11, 20) et ladite fibre de verre étant épissée à ses extrémités (14) au niveau d'une fibre optique de câble à fibres optiques à surveiller.

4. Dispositif de mesure selon la revendication 3, **caractérisé en ce que** la fibre de verre (17) est disposée dans la cassette (15) du point de jonction sous la forme d'au moins une boucle.

5. Dispositif de mesure selon l'une quelconque des revendications 1 à 4, dans lequel le boîtier est configuré comme une cassette (11), **caractérisé en ce que** la cassette (11) présente un dispositif tenseur (18) avec une bande de serrage (19) pouvant être appuyée sur la plaque spongieuse (12) pour régler la hauteur de gonflement et pour comprimer la plaque spongieuse (12) après élimination de l'eau entrée.
